# EUROPÄISCHE PATENTSCHRIFT

(11) **EP 0 563 692 B1**
(45) Veröffentlichungstag und Bekanntmachung des Hinweises auf die Patenterteilung: **22.11.1995**
(21) Anmeldenummer: 93104459.8
(22) Anmeldetag: 18.03.1993
(51) Int. Cl.: A23G 1/18, A23G 3/22, A21C 9/04, A23G 3/20

(54) **Temperier- und Überziehanlage für unterschiedliche Massen, insbesondere für weisse und nicht-weisse Schokolade**
Tempering and coating apparatus for different masses, particularly for white and non-white chocolat
Machine de carditionnement d'enrobage pour différentes derivées, en particulier du chocolat blanc et non-blanc

(30) Priorität: 27.03.1992 DE 4209966
(43) Veröffentlichungstag der Anmeldung: 06.10.1993
(73) Patentinhaber: Sollich GmbH & Co. KG, D-32102 Bad Salzuflen (DE)
(72) Erfinder: Sollich, Helmut, W-2341 Rabenkirchen (DE)
(74) Vertreter: Rehberg, Elmar, Dipl.-Ing.

(56) Entgegenhaltungen:
- DE-A- 2 452 177
- DE-A- 4 209 966
- GB-A- 957 996
- US-A- 3 958 018

## Beschreibung

Die Erfindung bezieht sich auf eine Temperier- und Überziehanlage für unterschiedliche Massen, insbesondere für weiße und nicht-weiße Schokolade, mit mindestens einer, vorzugsweise zwei und dann links und rechts eines angetriebenen Laufbandes für die zu überziehenden Warenstücke angeordneten Baugruppe aus einer Überziehmaschine und einer Temperiermaschine, wobei die Temperiermaschine oder die Temperiermascninen ortsfest angeordnet, die Überziehmaschine oder die Überziehmaschinen ouer zur Laufrichtung des Laufbandes verfahrbar vorgesehen sind und eine Verbindungsleitung zwischen der Temperiermaschine und der Überziehmaschine jeder Baugruppe, eine Vorlaufleitung zwischen je einem Tank für die jeweilige Masse und der zugehörigen Temperiermaschine und/oder Überziehmaschine jeder Baugruppe sowie eine Rücklaufleitung zwischen der Überziehmaschine und dem zugehörigen Tank jeder Baugruppe aus Überziehmaschine und Temperiermaschine vorgesehen sind. Es sind also vorzugsweise zwei Baugruppen gebildet, wobei jede Baugruppe eine Temperiermaschine und eine Überziehmaschine aufweist. Die Temperiermaschine ist ortsfest angeordnet. Die Zugehörige Überziehmaschine ist quer zur Laufrichtung des Bandes für die zu überziehenden Warenstücke verfahrbar vorgesehen, was in einer auf Schienen aufgelagerten Ausführung oder in aufgehängtem Zustand der Überziehmaschine erfolgen kann. Statt die Temperier- und Überziehanlage für weiße und nicht-weiße Schokolade einzusetzen, ist es natürlich auch möglich, mit der einen Baugruppe dunkle Schokolade zu Verarbeiten, während die andere Baugruppe für helle Schokolade bestimmt ist. Ebenso ist eine anwendungsbezogene Aufteilung zwischen echter Schokolade in der einen Baugruppe und beispielsweise Fettglasur in der anderen Baugruppe möglich. Auch dabei wird dann eine Vermischung dieser beiden Massen vermieden. Da die Fettglasur nicht temperiert werden muß, kann in diesem Fall in der einen Baugruppe die Temperiermaschine entfallen, weil die betreffende Überziehmaschine direkt aus einem vorratstank beschickt werden kann. Es kann auch die Rücklaufleitung zwischen der Überziehmaschine und dem Vorratstank entfallen.

Eine Temperier- und Überziehanlage der eingangs beschriebenen Art ist aus der Zeitschrift Zucker- und Süßwaren-Wirtschaft, Heft 4, 1990, Seiten 135 - 138 bekannt. Die beiden Baugruppen sind rechts und links des Laufbandes gelagert und die beiden Überziehmaschinen können im Wechsel eingesetzt werden. Dabei wird die Baugruppe für weiße Schokolade nicht gereinigt. Die Baugruppe für nicht-weiße Schokolade, wird entweder nur für eine Art nicht-weißer Schokolade eingesetzt oder aber, beispielsweise bei abwechselnder Benutzung für dunkle Schokolade und für Milchschokolade, muß eine Spülung oder eine Reinigung der betreffenden Teile der Baugruppe vorgenommen werden. Dies kann geschehen, während die Baugruppe für weiße Schokolade im Einsatz ist. Die bekannten Baugruppen sind hinsichtlich der Schokoladeleitungen mit Schnellverschlüssen ausgestattet, mit deren Hilfe die Leitungen entkoppelt bzw. im eingefahrenen Zustand gekoppelt werden. Diese Schnellverschlüsse müssen zumindest in der Verbindungsleitung zwischen der Temperiermaschine und der Überziehmaschine und in der Rücklaufleitung zwischen Überziehmaschine und zugehörigem Tank jeder Baugruppe vorgesehen sein. Der mechanische Wechsel der Überziehmaschinen und das Wiederanfahren der jeweiligen Temperiermaschine erfordert mindestens etwa 45 Minuten Zeit. Da über die Schnellverschlüsse eine Entkupplung der betreffenden Teile erfolgt, ist es auch nicht möglich, die Temperiermaschine im ausgefahrenen Zustand der Überziehmaschine in Bereitschaft zu bringen. Das Kuppeln und Entkuppeln der Schnellverschlüsse ist im übrigen mit Schokoladeverlusten verbunden.

Es ist weiterhin eine Temperier- und Überziehmaschine bekannt, bei der nur eine einzige Baugruppe aus einer Temperiermaschine und einer Überziehmaschine eingesetzt wird. Wenn hier ein Wechsel stattfindet, so ergeben sich unterschiedliche Konsequenzen, je nachdem wie die Aufeinanderfolge der verschiedenen Materialien ist. Beim Wechsel zwischen dunkler Schokolade und Milchschokolade läßt sich dies durch einen einfachen Massewechsel mit nachfolgendem Spülvorgang durchführen. Das Vermischen von kleineren Rückständen spielt dabei keine Rolle. Bei einem Wechsel von Milchschokolade oder dunkler Schokolade auf weiße Schokolade ist jedoch eine umfassende Reinigung der Baugruppe einschl. der Leitungen erforderlich. Dies geschieht durch ein sorgfältiges Waschen der Überziehmaschine und der Temperiermaschine, was einen Zeitaufwand und eine Betriebsunterbrechung von mehreren Stunden erfordert. Damit eine solche Baugruppe durch einen Waschvorgang gereinigt Werden kann, müssen alle mit der Schokolade in Berührung kommenden Teile aus Edelstahl hergestellt werden. Die erforderliche Naßreinigung mit heißem Wasser erhöht die Gefahr einer biologischen Kontamination, insbesondere Salmonellen-Gefahr. Da Schokoladenmassen in der Regel weniger als 1 % Feuchtigkeit enthalten, besteht an sich, d. h. von der Masse her, keine Salmonellengefahr. Erst die Naßreinigung bzw. die Rückstände des Reinigungswassers erhöhen die Salmonellengefahr.

Der Erfindung liegt die Aufgabe zugrunde, eine Temperier- und Überziehanlage der eingangs beschriebenen Art bereitzustellen, die einen schnellen Massewechsel ermöglicht.

Erfindungsgemaß wird dies dadurch erreicht, daß jede Verbindungsleitung und jede Rücklaufleitung mindestens zwei Rohrabschnitte aufweist, die über ein Drehgelenk miteinander verbunden sind und an ihren Enden weitere Drehgelenke aufweisen, so daß die Überziehmaschinen ohne Leitungsentkopplung quer verfahrbar sind. Die beiden Kreisläufe der beiden Baugruppen - insbesondere die beiden Temperierkreisläufe, wenn zwei Baugruppen je mit Überziehmaschine und Temperiermaschine - bleiben damit zu jeder Zeit voll funktionsfähig, d. h. während die eine Baugruppe sich noch im Betrieb befindet, also z. Bsp. mit der zugehörigen Überziehmaschine Warenstücke mit dunkler Schokolade überzogen werden, kann die andere Baugruppe mit weißer Schokolade bereits hochgefahren werden, wobei bereits der Masseumlauf aus dem zugehörigen Tank, über die zugehörige Temperiermaschine in die zugehörige Überziehmaschine, die noch nicht eingefahren ist, und wieder zurück zum Tank erfolgen, so daß sich die weiße Schokolade bereits in temperiertem Zustand befindet. Die bisher übliche Anlaufzeit beim Massewechsel entfällt. Für einen Massewechsel ist es nur noch erforderlich, die Überziehmaschine der einen Baugruppe aus der eingefahrenen Stellung nach außen auszufahren und die Überziehanlage der anderen Baugruppe in die Betriebsstellung relativ zum Laufband einzufahren. Für diesen Wechsel der beiden Überziehmaschinen ist eine Zeitspanne von etwa 5 Minuten ausreichend. Es besteht keine Gefahr einer Kontamination, da ein Waschvorgang nicht stattfindet. Es ergibt sich aus diesem Grunde keine Notwendigkeit, nicht rostende Materialien für die Einzelteile der Baugruppen zu verwenden. Es entfällt weiterhin vorteilhaft ein Schokoladeverlust, wie er beim Entkoppeln und Koppeln der Leitungen bisher unvermeidlich war. Ein Massewechsel kann bei der Temper- und Überziehanlage ohne Weiteres vom Bedienungspersonal der Anlage durchgeführt werden. Der Einsatz von speziellen Mechanikern und Elektrikern entfällt. Eine Vermischung zwischen farbiger und weißer Schokolade tritt nicht ein. Wenn in der einen Baugruppe, die für nichtweiße Schokolade bestimmt ist, ein Wechsel von z. Bsp. dunkler Schokolade auf Milchschokolade oder umgekehrt durchgeführt werden soll, kann dies durch einen einfachen Spülvorgang erfolgen, der so gesteuert wird, daß nur geringe Massevermischungen auftreten, die ohne nennenswerte Bedeutung sind.

Bei einem anderen Fall kann eine Baugruppe aus einer Überziehmaschine und einer Temperiermaschine für Schokolade und eine zweite Baugruppe aus einer Überziehmaschine allein für Fettglasur eingesetzt werden. In der zweiten Baugruppe entfällt die Temperiermaschine; auch die Rücklaufleitung zum Tank ist entbehrlich.

Es ist aber auch ein Anwendungsfall möglich, bei dem nur eine einzige Baugruppe aus einer Überziehmaschine und einer Temperiermaschine vorgesehen ist. Damit können in einer Anlage wechselweise Produkte mit und ohne Überzug hergestellt werden. Während der Herstellung von Produkten ohne Überzug wird die Überziehmaschine aus hygienischen Gründen aus der Anlage herausgefahren. Der in der Anlage entstehende Freiraum wird durch ein Transportband geschlossen. Unter einem Drehgelenk wird jede Art von flexibler Verbindung verstanden, die keine mechanische Trennung von Rohrleitungen erfordert, aber trotzdem das Verfahren der Überziehmaschine zuläßt. Dem Fachmann stehen mehrere Realisationsmöglichkeiten für Drehgelenke zur Verfügung, beispielsweise in Form von gegeneinander verdrehbaren Flanschen, als Faltenbälge, als Schlauchstücke aus elastischem Material, z. B. Kunststoff oder dgl..

Die beiden einander zugekehrten Rohrabschnitte können miteinander in allen Stellungen einen Winkel < 180° einschließen. Insbesondere kann der Winkel in der Größenordnung von 90° liegen, wobei der eine Rohrabschnitt etwa parallel zur Laufrichtung angeordnet sein kann.

Es besteht die Möglichkeit, die Verbindungsleitung und die Rücklaufleitung jeder Baugruppe an je einer Andockeinheit zusammenzufassen. Diese beiden Andockeinheiten sind dann rechts und links des Laufbandes angeordnet, und zwar in einem Bereich, der etwa zwischen der Temperiermaschine und der zugehörigen Überziehmaschine liegt. Diese Ausführungsform hat den Vorteil, daß die Leitungslänge und die Anzahl der Drehgelenke vergleichsweise klein ist. Die Andockeinheit selbst muß in entsprechendem Maße beweglich angeordnet bzw. aufgehängt sein.

Andererseits ist es möglich, die beiden Verbindungsleitungen und die beiden Rücklaufleitungen der beiden Baugruppen an einer gemeinsamen Andockeinheit zusammenzufassen. Diese gemeinsame Andockeinheit kann ortsfest gelagert sein. Hierdurch erhöht sich die Leitungslänge etwas. Ein wesentlicher Nachteil tritt jedoch nicht ein. Es ergibt sich insbesondere die Möglichkeit, die gemeinsame Andockeinheit mittig über dem Laufband anzuordnen, also an einer Stelle, an der ohnehin in den meisten Fällen ausreichend Platz zur Verfügung steht.

Die Erfindung wird an bevorzugten Ausführungsbeispielen, die in den Zeichnungen dargestellt sind, weiter erläutert und beschrieben. Es zeigen:
- Figur 1: eine perspektivische Darstellung einer ersten Ausführungsform der Temper- und Überziehanlage,
- Figur 2: eine schematisierte Draufsicht auf eine zweite Ausführungsform der Temper- und Überziehanlage,
- Figur 3: die Darstellung eines Drehgelenks und
- Figur 4: einen Rohrbogen mit Drehgelenk.

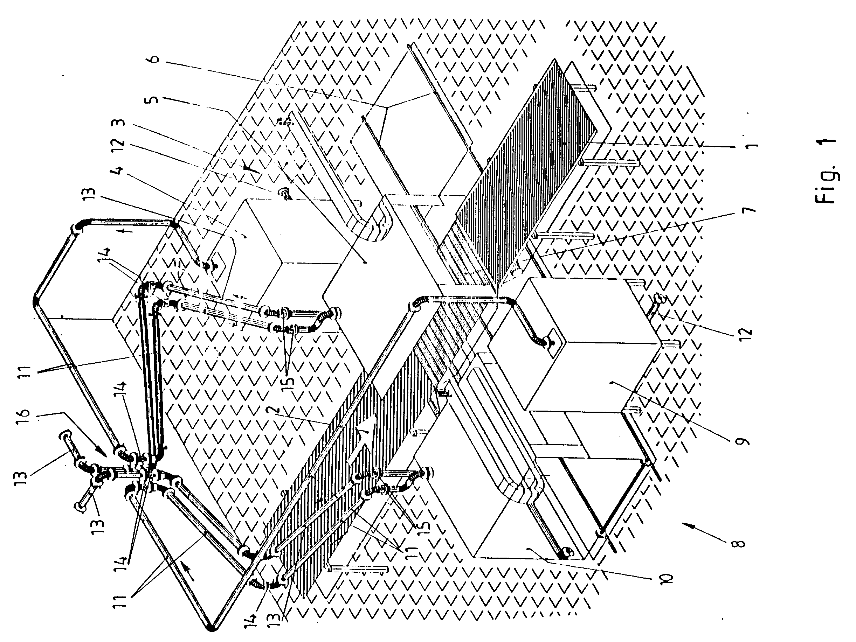

In Figur 1 ist ein Laufband 1 dargestellt, dessen Laufrichtung durch einen Pfeil 2 angegeben ist. Auf dem Laufband 1 befinden sich die zu überziehenden Warenstücke, die der Übersichtlichkeit halber nicht dargestellt sind. Auf der linken Seite des Laufbands 1 ist eine Baugruppe 3 dargestellt, die im wesentlichen aus einer Temperiermaschine 4 und einer Überziehmaschine 5 besteht. Die Temperiermaschine 4 ist ortsfest angeordnet, während die Überziehmaschine 5 auf Schienen 6 quer zur Laufrichtung des Laufbands 1 verfahrbar ist. Die Überziehmaschine 5 ist in eingefahrenem Zustand dargestellt. Sie befindet sich damit mit ihrem Schleierformer oberhalb des Laufbands 1 und mit anderen wesentlichen Teilen unterhalb des Laufbands 1, welches in diesem Bereich von einem durchlässigen Gitterband 7 gebildet wird. Die Baugruppe 3 möge für weiße Schokolade vorgesehen bzw. bestimmt sein.

Auch auf der rechten Seite des Laufbands 1 befindet sich eine Baugruppe 8, die auch hier wiederum aus einer Temperiermaschine 9 und einer Überziehmaschine 10 besteht. Auch die Temperiermaschine 9 ist ortfest angeordnet. Die Überziehmaschine 10 befindet sich in der ausgefahrenen Stellung, da die Überziehmaschine 5 der anderen Baugruppe 3 eingefahren ist. Die Baugruppe 8 möge für dunkle Schokolade und für Mischschokolade vorgesehen sein.

Innerhalb jeder Baugruppe 3 und 8 gibt es jeweils eine Reihe weiterer Bestandteile, die hier gemeinsam beschrieben werden, obwohl sie jeweils doppelt und damit getrennt voneinander vorgesehen sind. Eine Verbindungsleitung 11, die aus mehreren Rohrabschnitten bestehen kann, führt von der Temperiermaschine 4 zur Überziehmaschine 5. Auch die Temperiermaschine 9 und die Überziehmaschine 10 der anderen Baugruppe 8 sind über eine zweite Verbindungsleitung 11 miteinander verbunden. Zu jeder Baugruppe gehört auch noch ein Tank für die betreffende Art der Schokolade, der beheizbar ausgebildet ist und hier der Übersichtlichkeit halber nicht dargestellt ist. Von diesem Tank führt jeweils eine Vorlaufleitung 12 zu der jeweiligen Temperiermaschine 4 bzw. 9. Da die beiden Temperiermaschinen 4 und 9 ortsfest angeordnet sind, können auch die beiden Vorlaufleitungen 12 als ortsfest verlegte Leitungen vorgesehen sein. Sie sind hier der Übersichtlichkeit nur insoweit dargestellt, als der jeweilige Anschluß an die jeweilige Temperiermaschine dargestellt ist. Weiterhin gibt es Rücklaufleitungen 13, die jeweils von der Überziehmaschine 5 zu dem zugehörigen Tank und von der Überziehmaschine 10 zu dem zugehörigen Tank führen. Für die Beweglichkeit der Rohrabschnitte der Verbindungsleitungen 11 und der Rücklaufleitungen 13 sind Drehgelenke 14 und 15 vorgesehen. Die Drehgelenke 14 und 15 sind durchaus ähnlich und vergleichbar ausgebildet. Bei den Drehgelenken 14 liegen jedoch die Achsen der beiden angeschlossenen Rohrabschnitte zueinander etwa parallel bzw. in parallelen Ebenen, während bei den Drehgelenken 15 eine mehr rechtwinklige Konfiguration gegeben ist. Durch die Drehgelenke 14 und 15 werden die Verbindungsleitungen 11 und die Rücklaufleitungen 13 so beweglich gemacht, daß diese Leitungen der jeweiligen Bewegung der jeweiligen Überziehmaschine 5 bzw. 10 folgen können und damit ein Entkuppeln von Leitungen beim Massewechsel vermieden wird. Durch Zusammenfassung von vier Drehgelenken 14 etwa in einer vertikalen Längsmittelebene oberhalb des Laufbands 1 ist eine gemeinsame Andockeinheit 16 geschaffen, an dem die betreffenden Drehgelenke 14 ortsfest aufgehängt sein können. Der Teil der Verbindungsleitungen 13 von den jeweiligen Temperiermaschinen 4 bzw. 9 zu der gemeinsamen Andockeinheit 14 braucht keine Drehgelenke zu enthalten, da die Temperiermaschinen 4 und 9 und auch die gemeinsame Andockeinheit 16 ortsfest vorgesehen sind, so daß zwischen diesen beiden Punkten auch ortsfeste Leitungen verlegt werden können.

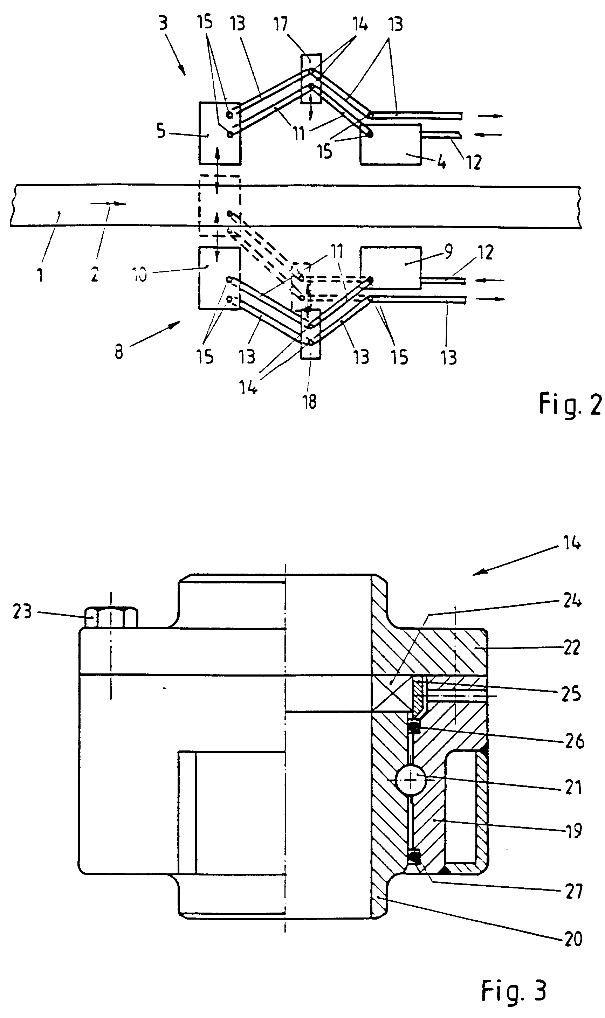

Figur 2 zeigt eine etwas schematisierte Darstellung, bei der jedoch in Übereinstimmung mit der Ausführungsform gemäß Figur 1 eine linke Baugruppe 3 und eine rechte Baugruppe 8 relativ zu dem Laufband 1 vorgesehen sind. Es ist hier jedoch keine gemeinsame Andockeinheit 16 gebildet, sondern jede Baugruppe 3 bzw. 8 besitzt eine separate Andockeinheit 17 bzw. 18. Durch eine Pfeildarstellung ist angegeben, daß hier die Andockeinheiten 17 und 18 geringfügig mitfahrbar quer zur Laufrichtung des Laufbands 1 gemäß Pfeil 2 vorgesehen sind. Die Verbindungsleitung 11 besteht hier nur aus zwei Rohrabschnitten, von den Anschlußrohren an der Temperiermaschine und der Überziehmaschine abgesehen. Somit ist auch nur ein einziges Drehgelenk 14 innerhalb der Verbindungsleitung 11 vorgesehen. Auf der Seite der Temperiermaschine 4 wie auch auf der Seite der Überziehmaschine 5 befindet sich ein Drehgelenk 15. Gleiches gilt auch für die andere Baugruppe 8.

Figur 3 zeigt die wesentlichen Einzelteile eines Drehgelenks 14 bzw. 15. Die Art des Drehgelenks ergibt sich aus der Art der anschließenden Rohrabschnitte, und zwar je nachdem, ob es sich um gerade Rohrabschnitte oder um 90°-Bogen handelt. Das Drehgelenk 14 besitzt ein Gehäuse 19, in welchem ein Rohrnippel 20, der mit dem einen Rohrabschnitt verbunden wird, mit Hilfe von Kugeln 21 drehbar gelagert ist. Mit dem Gehäuse 19 ist ein Flansch 22 über Schrauben 23 verbunden, wobei am Flansch 22 der andere Rohrabschnitt angreift. Zwischen dem Flansch 22 und dem Rohrnippel 20 befindet sich eine Dichtung 24, der ein Stützring 25 zugeordnet sein kann. Dichtringe 26 und 27 sind zwischen Rohrnippel 20 und Gehäuse 19 vorgesehen. Solche Drehgelenke 14 sind an sich auf anderen Gebieten der Technik bekannt.

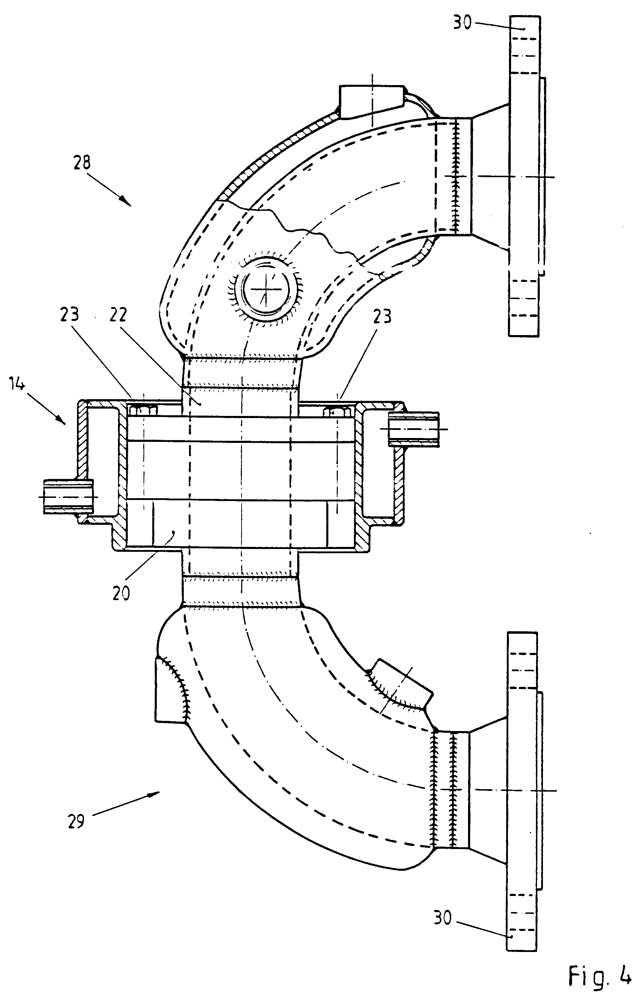

Figur 4 zeigt ein vervollständigtes Drehgelenk 14 mit zwei anschließenden Rohrbogen 28 und 29, die jeweils in Flanschen 30 enden, an denen mit Hilfe entsprechender Gegenflansche die Rohrabschnitte der Verbindungsleitungen 11 und der Rücklaufleitungen 13 angeschlossen werden. Wie ersichtlich, sind beide Rohrbogen 28 und 29 sowie auch das Drehgelenk 14 doppelwandig ausgebildet, so daß hier ein Wärmekreislauf angeschlossen werden kann, um die Temperatur der Schokoladenmasse zu steuern bzw. konstantzuhalten.

### Bezugszeichenliste:

- 1 =: Laufband
- 2 =: Pfeil
- 3 =: Baugruppe
- 4 =: Temperiermaschine
- 5 =: Überziehmaschine
- 6 =: Schiene
- 7 =: Gitterband
- 8 =: Baugruppe
- 9 =: Temperiermaschine
- 10 =: Überziehmaschine
- 11 =: Verbindungsleitung
- 12 =: Vorlaufleitung
- 13 =: Rücklaufleitung
- 14 =: Drehgelenk
- 15 =: Drehgelenk
- 16 =: Andockeinheit
- 17 =: Andockeinheit
- 18 =: Andockeinheit
- 19 =: Gehäuse
- 20 =: Rohrnippel
- 21 =: Kugeln
- 22 =: Flansch
- 23 =: Schrauben
- 24 =: Dichtung
- 25 =: Stützring
- 26 =: Dichtring
- 27 =: Dichtring
- 28 =: Rohrbogen
- 29 =: Rohrbogen
- 30 =: Flansch

## Patentansprüche

1. Temperier- und Überziehanlage für unterschiedliche Massen, insbesondere weiße und nicht-weiße Schokolade, mit mindestens einer, vorzugsweise zwei und dann links und rechts eines angetriebenen Laufbands (1) für die zu überziehenden Warenstücke angeordneten Baugruppen (3, 8) aus einer Überziehmaschine (5, 10) und einer Temperiermaschine (4, 9), wobei die Temperiermaschine oder die Temperiermaschinen (4, 9) ortsfest angeordnet, die Überziehmaschine (5) oder die Überziehmaschinen (5, 10) quer zur Laufrichtung des Laufbands (1) verfahrbar vorgesehen sind und eine Verbindungsleitung (11) zwischen der Temperiermaschine (4) und der Überziehmaschine (5) jeder Baugruppe (3), eine Vorlaufleitung (12) zwischen je einem Tank für die jeweilige Masse und der zugehörigen Temperiermaschine (4) und/oder Überziehmaschine (5) jeder Baueinheit (3) sowie eine Rücklaufleitung (13) zwischen der Überziehmaschine (5) und dem Tank jeder Baugruppe aus Überziehmaschine und Temperiermaschine vorgesehen sind, dadurch gekennzeichnet, daß jede Verbindungsleitung (11) und jede Rücklaufleitung (13) mindestens zwei Rohrabschnitte aufweist, die über ein Drehgelenk (14) miteinander verbunden sind und an ihren Enden weitere Drehgelenke (14 bzw. 15) aufweisen, so daß die Überziehmaschinen (5 bzw. 10) ohne Leitungsentkopplung quer verfahrbar sind.

2. Temper- und Überziehanlage nach Anspruch 1, dadurch gekennzeichnet, daß die beiden einander zugeordneten Rohrabschnitte miteinander einen Winkel < 180° einschließen.

3. Temper- und Überziehanlage nach Anspruch 1 oder 2, dadurch gekennzeichnet, daß die Verbindungsleitung (11) und die Rücklaufleitung (13) jeder Baugruppe (3 bzw. 8) an je einer Andockeinheit (17 bzw. 18) zusammengefaßt ist.

4. Temper- und Überziehanlage nach Anspruch 1 oder 2, dadurch gekennzeichnet, daß die beiden Verbindungsleitungen (11) und die beiden Rücklaufleitungen (13) der beiden Baugruppen (3 und 8) an einer gemeinsamen Andockeinheit (16) zusammengefaßt sind.

5. Temper- und Überziehanlage nach Anspruch 4, dadurch gekennzeichnet, daß die gemeinsame Andockeinheit (16) mittig über dem Laufband (1) angeordnet ist.

## Claims

1. Tempering and coating apparatus for different masses, particularly for white and non-white chocolate, having at least one, preverably two subassemblies (3, 8), in said case of the two subassemblies the subassemblies being arranged on the left and the right of a driven conveyor belt (1) for the articles to be coated, each subassembly consisting of a tempering machine (4, 9) and a coating machine (5, 10) wherein the tempering machine or tempering machines (4, 9) are arranged stationarily and the coating machine or coating machines (5, 10) are provided for being moved transversely to the running direction of the conveyor belt (1), and wherein a connecting line (11) is provided between the tempering machine (4) and the coating machine (5) of each subassembly (3), a flow pipe is provided (12) between each tank for the respective mass and the accompanying tempering machine (4) and/or coating machine (5) of each subassembly (3), and a return pipe (13) is provided between the coating machine (5) and the tank of each subassembly consisting of coating machine and tempering machine,
**characterized in that** each connecting line (11) and each return line (13) comprises at least two pipe sections which are connected to each or via an articulated joint (14) and comprise further articulated joints (14 or 15, respectively) on their ends so that the coating machines (5 or 10, respectively) can be moved transversely without uncoupling the lines.

2. Tempering and coating apparatus to claim 1,
**characterized in that** the two pipe sections allocated to each other make an angle of < 180° together.

3. Tempering and coating apparatus according to claim 1 or 2,
**characterized in that** the connecting line (11) and the return line (13) of each subassembly (3 or 8, respectively) are each collected at a docking unit (17 or 18, respectively).

4. Tempering and coating apparatus according to claim 1 or 2,
**characterized in that** the two connecting lines (11) and the two return lines (13) of the two subassemblies (3 or 8, respectively) are collected at a common docking unit (16).

5. Tempering and coating apparatus according to claim 4,
**characterized in that** the common docking unit (16) is located centrically above the conveyor belt (1).

## Revendications

1. Installation d'équilibrage de température et de couverture pour différentes pâtes, en particulier du chocolat blanc et du chocolat non blanc, comportant au moins un, de préférence deux groupes de construction (3, 8) disposés alors à gauche et à droite d'un tapis (1) entraîné pour les produits à recouvrir,constitués d'une machine de couverture (5, 10) et d'une machine d'équilibrage de température (4, 9) la machine ou les machines d'équilibrage de température (4, 9) étant fixes, la machine de couverture (5) ou les machines de couverture (5, 10) étant prévues déplaçables transversalement au sens de circulation du tapis (1) et une conduite de liaison (11) entre la machine d'équilibrage de température (4) et la machine de couverture (5) de chaque groupe (3), une conduite aller (12) entre un réservoir pour la masse respective et la machine d'équilibrage de température (4) correspondante et/ou la machine de couverture (5)de chaque unité de construction (3) ainsi qu'une conduite retour (13) entre la machine de couverture (5) et le réservoir de chaque groupe, fait de la machine de couverture et de la machine d'équilibrage de température, étant prévues et chaque conduite retour (13) comportant au moins deux potions de tuyau, qui sont reliées entre elles par une articulation tournante (14) et présentent à leurs extrémités d'autres articulations tournantes (14 ou 15), de sorte que les machines de couverture (5 ou 10) sont déplaçables transversalament sans désaccouplage des conduites.

2. Installation d'équilibrage de température et de couverture selon la revendication 1 caractérisée en ce que les deux portions de tuyau associées l'une à l'autre forment entre elles un angle < 180°.

3. Installation d'équilibrage de température et de couverture selon les revendications 1 ou 2, caractérisée en ce que la conduite de liaison (11) et la conduite retour (13) de chaque groupe (3 ou 8) sont réunies à une unité d'amarrage (17 ou 18).

4. Installation d'équilibrage de température et de couverture selon les revendications 1 ou 2, caractérisée en ce que les deux conduites de liaison (11) et les deux conduites retour (13) des deux groupes (3 et 8) sont réunies à une unité d'amarrage (16) commune.

5. Installation d'équilibrage de température et de couverture selon la revendication 4, caracterisée en ce que l'unité d'amarrage (16) commune est placée au centre au-dessus du tapis (1).
